# EUROPÄISCHE PATENTSCHRIFT

(11) **EP 1 951 537 B1**
(45) Veröffentlichungstag und Bekanntmachung des Hinweises auf die Patenterteilung: **14.09.2011**
(21) Anmeldenummer: 06806420.3
(22) Anmeldetag: 20.10.2006
(51) Int. Cl.: B60K 6/28, B60K 17/16

(54) **ANORDNUNG EINER ELEKTRISCHEN MASCHINE**
ARRANGEMENT OF AN ELECTRICAL MACHINE
AGENCEMENT D UNE MACHINE ÉLECTRIQUE

(30) Priorität: 26.10.2005 DE 102005051251; 28.04.2006 DE 102006019837
(43) Veröffentlichungstag der Anmeldung: 06.08.2008
(73) Patentinhaber: AUDI AG, 85045 Ingolstadt (DE); AUDI HUNGARIA MOTOR KFT., H-9027 Györ (HU)
(72) Erfinder: SCHRAMM, Hendrik, 85111 Adelschlag (DE); BENCSO, Csaba, H-9400 Sopron (HU)
(74) Vertreter: Lehle, Josef
(86) Internationale Anmeldenummer: PCT/EP2006/010118
(87) Internationale Veröffentlichungsnummer: WO 2007/048542

(56) Entgegenhaltungen:
- EP-A- 0 727 332
- EP-A- 1 160 119
- DE-A1- 4 436 383
- DE-A1- 10 152 476

## Beschreibung

Die Erfindung betrifft einen Antriebsstrang mit einer Anordnung einer elektrischen Maschine zwischen der Kraftabgabewelle einer Brennkraftmaschine und einem Geschwindigkeits-Wechselgetriebe für Kraftfahrzeuge, gemäß dem Oberbegriff des Patentanspruches 1.

Einen derartigen Antriebsstrang nach dem Oberbegriff des Anspruchs 1 beschreibt die DE 101 52 476 A1, bei der die elektrische Maschine als Starter-Generator-Vorrichtung ausgebildet ist; die elektrische Maschine kann aber auch in einer Hybridantriebsvorrichtung das Kraftfahrzeug zusätzlich oder eigenständig antreiben. Da die elektrische Maschine in der Anordnung im Kraftfahrzeug der Brennkraftmaschine nachgeschaltet ist, können sich in Verbindung mit einem ebenfalls erforderlichen Anfahrelement bauliche Probleme ergeben, insbesondere bei einem frontseitigen Antriebsaggregat des Kraftfahrzeuges mit Frontantrieb bzw. einem vorderen Achsdifferenzial.

Aufgabe der Erfindung ist es, einen Antriebsstrang der gattungsgemäßen Art vorzuschlagen, der baulich besonders kompakt ausgeführt ist und der eine günstige Achsgewichtsverteilung des Kraftfahrzeuges insbesondere bei Frontantrieb oder Allradantrieb ermöglicht.

Diese Aufgabe wird mit den Merkmalen des Patentanspruches 1 gelöst. Vorteilhafte Weiterbildungen der Erfindung beschreiben die weiteren Patentansprüche.

Erfindungsgemäß wird vorgeschlagen, dass zwischen der Kraftabgabewelle der Brennkraftmaschine und dem Rotor der elektrischen Maschine eine Zwischenwelle vorgesehen ist und dass innerhalb des dadurch gebildeten, axialen Abstandes eine quer zur Antriebsdrehachse verlaufende Abtriebswelle eines Differenziales für den Antrieb eines Rades des Kraftfahrzeuges positioniert ist. Diese Anordnung ermöglicht es, z. B. bei einem Frontantrieb des Kraftfahrzeuges, die Brennkraftmaschine - deren Lage auch durch die Positionierung des vorderen Achsdifferenziales bestimmt ist - weiter nach hinten zu verlegen, mit entsprechender günstiger Verteilung des Achsgewichtes. Ferner können bauliche und konstruktive Zwänge durch die ansonsten vorhandene bauliche Gedrängtheit in der Anordnung der elektrischen Maschine und dem benachbarten Anfahrelement, z. B. einer Trennkupplung und/oder einem Drehmomentwandler, entzerrt werden.

In baulich besonders kompakter Anordnung kann das Anfahrelement mit dem Rotor der elektrischen Maschine zu einer Baueinheit zusammengebaut und in das Gehäuse des Wechselgetriebes integriert sein. Es versteht sich, dass das Gehäuse entsprechend angepasst und ggf. erweitert sein muss.

Des weiteren können die Zwischenwelle und die Abtriebswelle des Differenziales in einem Zwischengehäuse angeordnet sein, an das das Differenzialgetriebe seitlich angebaut ist. Daraus resultiert eine vereinfachte Fertigung der Bauteile zu Vormontageeinheiten, die dann mit der Brennkraftmaschine zu einem Antriebsaggregat zusammenbaubar sind.

Dazu kann in weiterer Montagevereinfachung der Rotor der elektrischen Maschine in einer Querwand des Wechselgetriebes drehbar gelagert über eine Steckverbindung mit der Zwischenwelle drehmomentübertragend verbunden sein.

Ferner kann die Zwischenwelle fest mit der Kraftabgabewelle der Brennkraftmaschine verbunden oder einstückig mit dieser ausgebildet sein und somit ebenfalls mit der Brennkraftmaschine eine Vormontageeinheit bilden.

In alternativer Ausgestaltung der Erfindung kann zwischen der Kraftabgabewelle der Brennkraftmaschine und der Zwischenwelle ein Drehschwingungsdämpfer eingeschaltet sein. Der Drehschwingungsdämpfer kann insbesondere ein Zweimassenschwungrad (ZMS) sein, dessen Primärmasse an der Kraftabgabewelle befestigt ist und das über Dämpfungsmittel und ein scheibenförmiges Mitnehmerteil mit der Zwischenwelle gekoppelt ist. Alternativ kann das ZMS auch zwischen die Zwischenwelle und dem Rotor der elektrischen Maschine geschaltet sein. Daraus resultiert, dass als Sekundärmasse des ZMS in vorteilhafter Weise der Rotor der elektrischen Maschine und das nachgeschaltete Anfahrelement dienen.

Des weiteren kann baulich besonders vorteilhaft die als Anfahrelement dienende Trennkupplung, z. B. eine Einscheiben-Trockenreibungskupplung bekannter Bauart, mit dem Rotor der Vorrichtung zu einer Baueinheit zusammengebaut sein, wobei die Trennkupplung zumindest teilweise radial innerhalb des Rotors liegen kann.

Dabei kann bevorzugt der ringförmige Rotor um ein topfförmiges Antriebsteil herum angeordnet sein, welches zugleich die Anpressplatte der Trennkupplung bildet.

Die Zwischenwelle kann montagegünstig fest mit dem topfförmigen Antriebsteil verbunden sein und über eine Steckverbindung trieblich mit der Primärmasse des ZMS korrespondieren.

Besonders vorteilhaft kann ferner die Zwischenwelle in einem an dem Gehäuse des Wechselgetriebes befestigten Zwischenwandabschnitt drehbar gelagert sein und somit eine robuste und schwingungsresistente Abstützung des Rotors mit der integrierten Trennkupplung sicherzustellen.

Der Zwischenwandabschnitt kann zumindest im Bereich der quer verlaufenden Abtriebswelle unterbrochen sein, also ggf. nur oberhalb der Abtriebswelle ausgeführt sein und ein Lager, insbesondere ein Wälzlager, für die Zwischenwelle tragen.

Schließlich kann auch die Eingangswelle des Wechselgetriebes in dem topfförmigen Antriebsteil und/oder in der Zwischenwelle drehbar gelagert sein.

Zwei Ausführungsbeispiele der Erfindung sind im Folgenden mit weiteren Einzelheiten näher erläutert. Die grob schematische Zeichnung zeigt in
- Fig. 1: in einer Seitenansicht eine Anordnung einer elektrischen Maschine mit einer Trennkupplung und einem aufgeteilten Zweimassenschwungrad (ZMS) zwischen der Kraftabgabewelle einer Brennkraftmaschine und einem Geschwindigkeits-Wechselgetriebe für Kraftfahrzeuge;
- Fig. 2: eine alternative Anordnung gemäß Fig. 1, jedoch ohne einem Zweimas- senschwungrad als Drehschwingungsdämpfungseinrichtung an der Kraftabgabewelle der Brennkraftmaschine; und
- Fig. 3: eine grob schematische Draufsicht auf die Anordnung gemäß Fig. 2.

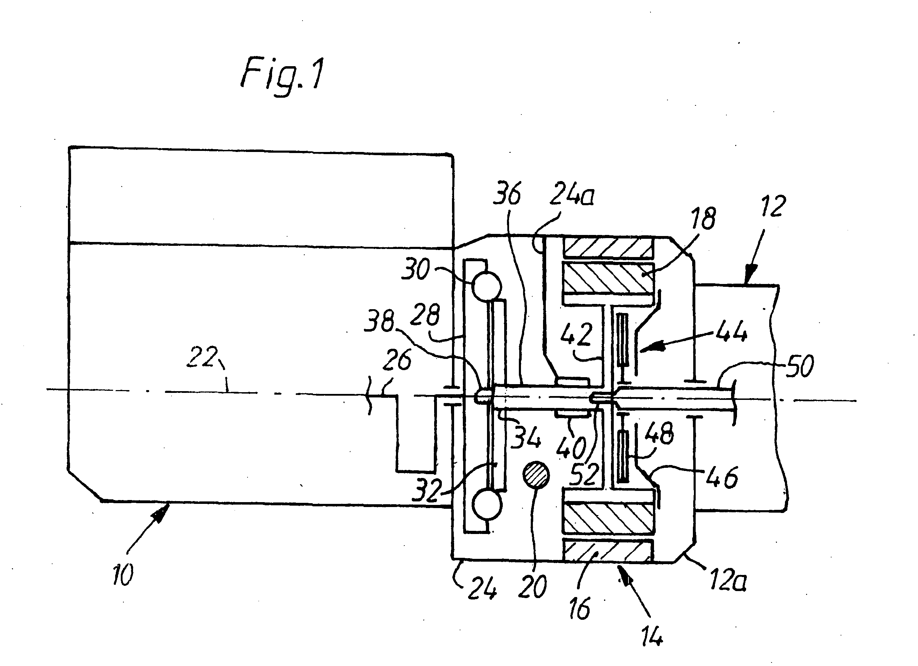

Die als Blockschaltbild dargestellte Antriebsanordnung gemäß Fig. 1 weist eine Brennkraftmaschine 10, ein nachgeschaltetes, nur teilweise angedeutetes Geschwindigkeits-Wechselgetriebe 12 und als elektrische Maschine eine Starter-Generator-Vorrichtung 14 mit einem ringförmigen Stator 16 und einem ringförmigen Rotor 18 auf. Die genannten Bauteile sind soweit nicht beschrieben herkömmlicher Bauart für Kraftfahrzeuge; so kann das Wechselgetriebe 12 ein Schaltgetriebe oder ein automatisches Getriebe sein, die Vorrichtung 14 kann eine beliebige Art von elektrischer Maschine, z. B. eine elektrische asynchron Drehstrommaschine sein, mittels der die Brennkraftmaschine 10 gestartet und das Kraftfahrzeug im Hybridantrieb angetrieben werden kann.

An das Wechselgetriebe 12 ist in in der Fig. 1 nicht ersichtlicher Weise ein Differenzial seitlich angebaut, dessen eine Abtriebswelle 20 unterhalb der Drehachse 22 der Antriebsanordnung 10, 12, 14 und quer verlaufend bzw. die Drehachse 22 kreuzend durch das zwischen der Brennkraftmaschine 10 und dem Wechselgetriebe 12 angeordnete Gehäuse 24 (Kupplungsglocke) geführt ist und über eine weiterführende Gelenkwelle ein Rad des Kraftfahrzeuges (z. B. bei Front- oder Allradantrieb) antreibt.

An die Kraftabgabewelle bzw. Kurbelwelle 26 der Brennkraftmaschine 10 ist ein Drehschwingungsdämpfer bzw. ein Zweimassenschwungrad (ZMS) angeflanscht, das sich aus einer scheibenförmigen Primärmasse 28, einer durch Federpakete gebildeten Dämpfungseinrichtung 30 und einer noch zu beschreibenden Sekundärmasse zusammensetzt. Die Primärmasse 28 und die Dämpfungseinrichtung 30 können in bei ZMS bekannter Ausführung sein.

Mit der Dämpfungseinrichtung 30 ist in bekannter Weise ein scheibenförmiger Mitnehmer 32 in Eingriff, der in Drehrichtung gesehen über die Dämpfungseinrichtung 30 an die Primärmasse 28 gekoppelt ist und der über eine Steckverbindung 34 mit entsprechenden Steckverzahnungen mit einer Zwischenwelle 36 trieblich verbunden ist.

Die Zwischenwelle 36 ist ferner über einen angeformten, rotationssymmetrischen Lagerzapfen 38 in einer korrespondierenden Lagerbohrung (ohne Bezugszeichen) in der scheibenförmigen Primärmasse 28 verdrehbar gelagert.

Die Zwischenwelle 36, die zudem über ein Wälzlager 40 in einer nur abschnittsweise und oberhalb der Abtriebswelle 20 ausgebildeten Zwischenwand 24a des Gehäuses 24 drehbar gelagert ist, ist fest mit einem topfförmigen, rotationssymmetrischen Antriebsteil 42 verbunden, an dessen Außenumfang der Rotor 18 der Vorrichtung 14 aufgebracht ist.

Innerhalb des topfförmigen Antriebsteiles 42 ist eine als Anfahrelement vorgesehene, nur angedeutete Einscheiben-Trockenreibungskupplung bzw. Trennkupplung 44 an sich bekannter Bauart angeordnet, mit einem mit dem Antriebsteil 42 verschraubten Kupplungsdeckel 46 und einer dazwischen positionierten Mitnehmerscheibe 48, die wiederum drehschlüssig über eine Steckverbindung mit der Eingangswelle 50 des Wechselgetriebes 12 trieblich verbunden ist.

Zusätzlich ist die Eingangswelle 50 in dem Antriebsteil 42 über eine Lagerstelle 52 drehbar gelagert. Die Mitnehmerscheibe 48 der Kupplung 44 wird mittels einer nicht dargestellten Anpresseinrichtung unmittelbar an das als Grundplatte der Kupplung 44 dienende Antriebsteil 42 angepresst. Die Betätigungseinrichtung der Kupplung 44 ist nicht dargestellt und kann bekannter Bauart sein.

Der Stator 16 der Starter-Generator-Vorrichtung 14 ist fest in das Gehäuse 24 eingebaut und an das Bordnetz des Kraftfahrzeuges und an eine entsprechende elektronische Steuerung angeschlossen. Dabei kann bei in Leerlaufstellung geschaltetem Wechselgetriebe 12 und/oder geöffneter Trennkupplung 44 durch Strombeaufschlagung der Vorrichtung 14 die Brennkraftmaschine 10 gestartet und später bei laufender Brennkraftmaschine 10 als Generator zur Stromerzeugung geschaltet sein. Ferner kann ggf. über die Vorrichtung 14 bei Hybridantriebsauslegung das Kraftfahrzeug zusätzlich zur Brennkraftmaschine 10 elektrisch angetrieben werden.

Aufgrund der beschriebenen Anordnung bilden der Mitnehmer 32, die Zwischenwelle 36, das Antriebsteil 42 mit dem Rotor 18 und mit der integrierten Kupplung 44 die Sekundärmasse des ZMS, die über die Dämpfungseinrichtung 30 gegenüber Drehschwingungen gedämpft an die Primärmasse 28 angekoppelt ist.

Die Länge der Zwischenwelle 36 ist wie ersichtlich so berechnet, dass der erforderliche Freiraum für die quer verlaufende Abtriebswelle 20 gegeben ist.

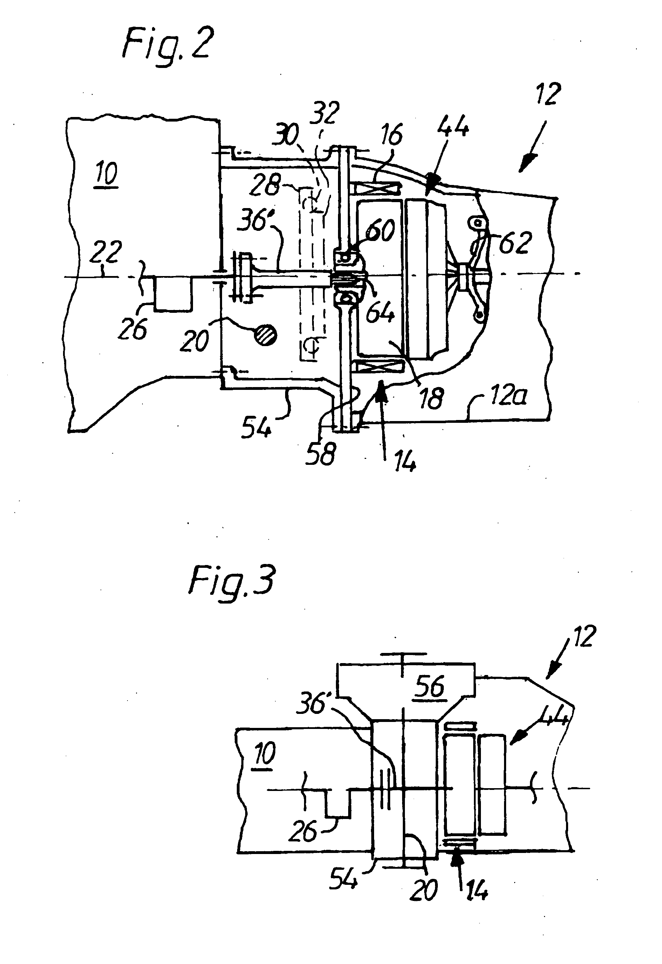

Die Fig. 2 und 3 zeigen eine weitere Ausführungsvariante der Erfindung, die nur soweit beschrieben ist, als sie sich wesentlich von der Fig. 1 unterscheidet. Funktionell gleiche Teile sind mit gleichen Bezugszeichen versehen.

Dabei ist an die Kraftabgabewelle 26 der Brennkraftmaschine 10 unmittelbar die Zwischenwelle 36' angeschlossen (z.B. durch eine Flanschverbindung) oder unmittelbar angeformt, die sich durch ein zwischen der Brennkraftmaschine 10 und das Wechselgetriebe 12 angeordnetes, separates Zwischengehäuse 54 erstreckt.

Unterhalb der Zwischenwelle 36' erstreckt sich quer dazu verlaufend die Abtriebswelle 20 des vorderen Achsdifferenziales 56 (vgl. Fig. 3), das seitlich an das Zwischengehäuse 54 angebaut ist und in seiner Längserstreckung wie ersichtlich das Gehäuse der Brennkraftmaschine 10 und des Wechselgetriebes 12 überragen kann. Die Brennkraftmaschine 10 und das Wechselgetriebe 12 können dadurch relativ nahe aneinander platziert werden.

Die elektrische Maschine 14 mit ihrem Stator 16 und Rotor 18 ist innerhalb des Gehäuses 12a des Wechselgetriebes 12 hinter einer eingangsseitigen Querwand 58 angeordnet, wobei der Rotor 18 in der Querwand 58 über ein Wälzlager 60 drehbar gelagert ist und in nicht näher dargestellter Weise in einer Baueinheit die Trennkupplung 44 als Anfahrelement trägt. Die nur angedeutete Kupplungsbetätigung 62 ist ebenfalls im Wechselgetriebe 12 integriert.

Die Querwand 58 ist zur Vereinfachung der Montage des Wechselgetriebes 12 mit der elektrischen Maschine 14 und der Trennkupplung 44 als separate Zwischenwand ausgebildet, die im Flanschbereich zwischen dem Zwischengehäuse 54 und dem Gehäuse 12a des Wechselgetriebes 12 positioniert und befestigt ist.

Die Zwischenwelle 36' ist über eine einheitlich mit 64 bezeichnete Steckverbindung drehschlüssig mit dem Rotor 18 der elektrischen Maschine 14 verbunden.

Die Erfindung ist nicht auf die dargestellten Ausführungsbeispiele beschränkt. So kann anstelle der beschriebenen Trennkupplung 44 auch eine Doppelkupplung, eine hydraulisch betätigte Lamellenkupplung, etc., je nach Getriebetyp verwendet sein. Das Gehäuse 24 kann die bei Wechselgetrieben 12 übliche Kupplungsglocke sein, die an das Gehäuse der Brennkraftmaschine entsprechend angeflanscht ist.

In der Ausführung gemäß den Fig. 2 und 3 kann ebenfalls eine Drehschwingungsdämpfungseinrichtung bzw. ein ZMS vorgesehen sein, das in an sich bekannter Weise an die Trennkupplung 44 entsprechend angebaut sein kann. Alternativ kann die Drehschwingungsdämpfungseinrichtung bzw. das ZMS wie in gestrichelten Linien in der Fig. 2 der Zeichnung angedeutet innerhalb des Zwischengehäuses 54 und zwischen der Abtriebswelle 20 des Differenziales 56 und der getriebeseitigen Querwand 58 angeordnet sein. Die Zwischenwelle 36' wäre dazu zweiteilig auszuführen, mit einem mit der Kraftabgabewelle 26 der Brennkraftmaschine 10 verbundenem Wellenabschnitt und einem mit dem Rotor 18 über die Steckverbindung 64 verbundenem Wellenabschnitt; die beiden Wellenabschnitte müssten ähnlich Fig. 1 ineinander verdrehbar gelagert sein.

## Patentansprüche

1. Antriebsstrang mit einer Anordnung einer elektrischen Maschine zwischen der Kraftabgabewelle einer Brennkraftmaschine und einem anschließenden Geschwindigkeits-Wechselgetriebe für Kraftfahrzeuge, wobei die aus Rotor und Stator bestehende elektrische Maschine mit einem den Kraftfluss unterbrechenden Anfahrelement kombiniert ist, **dadurch gekennzeichnet, dass** zwischen der Kraftabgabewelle (26) der Brennkraftmaschine (10) und dem Rotor (18) der elektrischen Maschine (14) eine Zwischenwelle (36; 36') vorgesehen ist und dass innerhalb des **dadurch** gebildeten, axialen Abstandes eine quer zur Antriebsdrehachse (22) verlaufende Abtriebswelle (20) eines Differenziales (56) für den Antrieb eines Rades des Kraftfahrzeuges positioniert ist.

2. Antriebsstrang nach Anspruch 1, **dadurch gekennzeichnet, dass** das Anfahrelement (44) mit dem Rotor (18) der elektrischen Maschine (14) zu einer Baueinheit zusammengebaut ist.

3. Antriebsstrang nach den Ansprüchen 1 und 2, **dadurch gekennzeichnet, dass** die elektrische Maschine (14) und das Anfahrelement (44) in das Gehäuse (12a) des Wechselgetriebes (12) integriert sind.

4. Antriebsstrang nach den Ansprüchen 1 bis 3, **dadurch gekennzeichnet, dass** die Zwischenwelle (36') und die Abtriebswelle (20) des Differenziales (56) in einem Zwischengehäuse (54) angeordnet sind, an das das Differenzialgetriebe (56) seitlich angebaut ist.

5. Antriebsstrang nach einem oder mehreren der vorhergehenden Ansprüche, **dadurch gekennzeichnet, dass** der Rotor (18) der elektrischen Maschine (14) in einer Querwand (58) des Wechselgetriebes (12) drehbar gelagert und über eine Steckverbindung (64) mit der Zwischenwelle (36') drehmomentübertragend verbunden ist.

6. Antriebsstrang nach Anspruch 5, **dadurch gekennzeichnet, dass** die Zwischenwelle (36') fest mit der Kraftabgabewelle (26) der Brennkraftmaschine (10) verbunden oder einstückig mit dieser ausgebildet ist.

7. Antriebsstrang nach einem oder mehreren der vorhergehenden Ansprüche, **dadurch gekennzeichnet, dass** zwischen der Kraftabgabewelle (26) der Brennkraftmaschine (10) und dem Rotor (18) der elektrischen Maschine (14) ein Drehschwingungsdämpfer (28, 30, 32) in die Zwischenwelle (36) eingeschaltet ist.

8. Antriebsstrang nach Anspruch 7, **dadurch gekennzeichnet, dass** der Drehschwingungsdämpfer ein Zweimassenschwungrad (ZMS) ist, dessen Primärmasse (28) an der Kraftabgabewelle (26) befestigt ist und das über eine Dämpfungseinrichtung (30) und ein scheibenförmiges Mitnehmerteil (32) mit der Zwischenwelle (36) gekoppelt ist.

9. Antriebsstrang nach Anspruch 7, **dadurch gekennzeichnet, dass** der Drehschwingungsdämpfer ein Zweimassenschwungrad (ZMS) ist, dessen Primärmasse (28) an der Zwischenwelle (36') befestigt ist und das über eine Dämpfungseinrichtung (30) und ein scheibenförmiges Mitnehmerteil (32) mit dem Rotor (18) trieblich verbunden ist.

10. Antriebsstrang nach einem oder mehreren der vorhergehenden Ansprüche, **dadurch gekennzeichnet, dass** der ringförmige Rotor (18) der elektrischen Maschine (14) um ein topfförmiges Antriebsteil (42) herum angeordnet ist, welches zugleich die Grundplatte einer als Anfahrelement vorgesehenen Trennkupplung (44) bildet.

11. Antriebsstrang nach einem oder mehreren der vorhergehenden Ansprüche, **dadurch gekennzeichnet, dass** die Zwischenwelle (36) fest mit dem topfförmigen Antriebsteil (42) verbunden ist und über eine Steckverbindung (34) trieblich mit dem scheibenförmigen Mitnehmer (32) des ZMS korrespondiert.

12. Antriebsstrang nach einem oder mehreren der vorhergehenden Ansprüche, **dadurch gekennzeichnet, dass** die Zwischenwelle (36) über einen an dem Gehäuse (24) befestigten Zwischenwandabschnitt (24a) drehbar gelagert ist.

13. Antriebsstrang nach Anspruch 12, **dadurch gekennzeichnet, dass** der Zwischenwandabschnitt (24a) zumindest im Bereich der quer verlaufenden Abtriebswelle (20) unterbrochen ist.

14. Antriebsstrang nach einem oder mehreren der vorhergehenden Ansprüche, **dadurch gekennzeichnet, dass** die Eingangswelle (50) des Wechselgetriebes (12) in dem topfförmigen Antriebsteil (42) und/oder in der Zwischenwelle (36) drehbar gelagert ist.

## Claims

1. Drivetrain having an arrangement of an electric machine between the power output shaft of an internal combustion engine and an adjoining variable-speed transmission for motor vehicles, wherein the electric machine, which is composed of a rotor and a stator, is combined with a starting element which interrupts the power flow, **characterized in that** an intermediate shaft (36; 36') is provided between the power output shaft (26) of the internal combustion engine (10) and the rotor (18) of the electric machine (14), and **in that** a drive output shaft (20), which runs perpendicular to the drive axis of rotation (22), of a differential (56) for the drive of a wheel of the motor vehicle is positioned within the axial spacing thereby formed.

2. Drivetrain according to Claim 1, **characterized in that** the starting element (44) is assembled with the rotor (18) of the electric machine (14) to form a structural unit.

3. Drivetrain according to Claims 1 and 2, **characterized in that** the electric machine (14) and the starting element (44) are integrated into the housing (12a) of the variable-speed transmission (12).

4. Drivetrain according to Claims 1 to 3, **characterized in that** the intermediate shaft (36') and the drive output shaft (20) of the differential (56) are arranged in an intermediate housing (54) to which the differential gearing (56) is attached at the side.

5. Drivetrain according to one or more of the preceding claims, **characterized in that** the rotor (18) of the electric machine (14) is rotatably mounted in a transverse wall (58) of the variable-speed transmission (12) and is connected in torque-transmitting fashion to the intermediate shaft (36) via a spline connection (64).

6. Drivetrain according to Claim 5, **characterized in that** the intermediate shaft (36') is fixedly connected to or formed in one piece with the power output shaft (26) of the internal combustion engine (10).

7. Drivetrain according to one or more of the preceding claims, **characterized in that**, between the power output shaft (26) of the internal combustion engine (10) and the rotor (18) of the electric machine (14), a rotary vibration damper (28, 30, 32) is connected into the intermediate shaft (36).

8. Drivetrain according to Claim 7, **characterized in that** the rotary vibration damper is a dual mass flywheel (DMF) whose primary mass (28) is fastened to the power output shaft (26) and which is coupled to the intermediate shaft (36) via a damping device (30) and a disc-shaped driver part (32).

9. Drivetrain according to Claim 7, **characterized in that** the rotary vibration damper is a dual mass flywheel (DMF) whose primary mass (28) is fastened to the intermediate shaft (36') and which is connected in terms of drive to the rotor (18) via a damping device (30) and a disc-shaped driver part (32).

10. Drivetrain according to one or more of the preceding claims, **characterized in that** the annular rotor (18) of the electric machine (14) is arranged around a pot-shaped drive input part (42) which simultaneously forms the base plate of a separating clutch (44) provided as a starting element.

11. Drivetrain according to one or more of the preceding claims, **characterized in that** the intermediate shaft (36) is fixedly connected to the pot-shaped drive input part (42) and communicates in terms of drive with the disc-shaped driver (32) of the DMF via a spline connection (34).

12. Drivetrain according to one or more of the preceding claims, **characterized in that** the intermediate shaft (36) is rotatably mounted by means of an intermediate wall section (24a) fastened to the housing (24).

13. Drivetrain according to Claim 12, **characterized in that** the intermediate wall section (24a) is interrupted at least in the region of the transversely running drive output shaft (20).

14. Drivetrain according to one or more of the preceding claims, **characterized in that** the input shaft (50) of the variable-speed transmission (12) is rotatably mounted in the pot-shaped drive input part (42) and/or in the intermediate shaft (36).

## Revendications

1. Chaîne cinématique comprenant un agencement d'une machine électrique entre l'arbre de sortie de force d'un moteur à combustion interne et une boîte de vitesse raccordée pour véhicules automobiles, la machine électrique constituée d'un rotor et d'un stator étant combinée à un élément de démarrage interrompant le flux de force, **caractérisée en ce qu'**entre l'arbre de sortie de force (26) du moteur à combustion interne (10) et le rotor (18) de la machine électrique (14) est prévu un arbre intermédiaire (36 ; 36') et **en ce qu'**à l'intérieur de la distance axiale ainsi formée est positionné un arbre de prise de force (20) d'un différentiel (56) s'étendant transversalement à l'axe de rotation d'entraînement (22), pour l'entraînement d'une roue du véhicule automobile.

2. Chaîne cinématique selon la revendication 1, **caractérisée en ce que** l'élément de démarrage (44) est assemblé au rotor (18) de la machine électrique (14) pour former une unité constructive.

3. Chaîne cinématique selon les revendications 1 et 2, **caractérisée en ce que** la machine électrique (14) et l'élément de démarrage (44) sont intégrés dans le boîtier (12a) de la boîte de vitesse (12).

4. Chaîne cinématique selon les revendications 1 à 3, **caractérisée en ce que** l'arbre intermédiaire (36') et l'arbre de prise de force (20) du différentiel (56) sont disposés dans un boîtier intermédiaire (54) sur lequel est monté latéralement l'engrenage différentiel (56).

5. Chaîne cinématique selon l'une quelconque ou plusieurs des revendications précédentes, **caractérisée en ce que** le rotor (18) de la machine électrique (14) est monté à rotation dans une paroi transversale (58) de la boîte de vitesse (12) et est connecté par le biais d'une connexion par enfichage (64) à l'arbre intermédiaire (36') en transmettant le couple.

6. Chaîne cinématique selon la revendication 5, **caractérisée en ce que** l'arbre intermédiaire (36') est connecté fixement à l'arbre de sortie de force (26) du moteur à combustion interne (10) ou est réalisé d'une seule pièce avec celui-ci.

7. Chaîne cinématique selon l'une quelconque ou plusieurs des revendications précédentes, **caractérisée en ce qu'**entre l'arbre de sortie de force (26) du moteur à combustion interne (10) et le rotor (18) de la machine électrique (14) est incorporé un amortisseur d'oscillations (28, 30, 32) dans l'arbre intermédiaire (36).

8. Chaîne cinématique selon la revendication 7, **caractérisée en ce que** l'amortisseur d'oscillations est une roue volante à deux masses (ZMS) dont la masse primaire (28) est fixée sur l'arbre de sortie de force (26) et qui est accouplée par le biais d'un dispositif d'amortissement (30) et d'une pièce d'entraînement en forme de disque (32) à l'arbre intermédiaire (36).

9. Chaîne cinématique selon la revendication 7, **caractérisée en ce que** l'amortisseur d'oscillations est une roue volante à deux masses (ZMS) dont la masse primaire (28) est fixée sur l'arbre intermédiaire (36') et qui est connectée par entraînement par le biais d'un dispositif d'amortissement (30) et d'une pièce d'entraînement en forme de disque (32) au rotor (18).

10. Chaîne cinématique selon l'une quelconque ou plusieurs des revendications précédentes, **caractérisée en ce que** le rotor annulaire (18) de la machine électrique (14) est disposé autour d'une partie d'entraînement en forme de pot (42) qui forme en même temps la plaque de base d'un embrayage de séparation (44) prévu en tant qu'élément de démarrage.

11. Chaîne cinématique selon l'une quelconque ou plusieurs des revendications précédentes, **caractérisée en ce que** l'arbre intermédiaire (36) est connecté fixement à la partie d'entraînement en forme de pot (42) et correspond par le biais d'une connexion par enfichage (34) avec entraînement au dispositif d'entraînement en forme de disque (32) de la ZMS.

12. Chaîne cinématique selon l'une quelconque ou plusieurs des revendications précédentes, **caractérisée en ce que** l'arbre intermédiaire (36) est monté à rotation par le biais d'une portion de paroi intermédiaire (24a) fixée au boîtier (24).

13. Chaîne cinématique selon la revendication 12, **caractérisée en ce que** la portion de paroi intermédiaire (24a) est interrompue au moins dans la région de l'arbre de prise de force (20) s'étendant transversalement.

14. Chaîne cinématique selon l'une quelconque ou plusieurs des revendications précédentes, **caractérisée en ce que** l'arbre d'entrée (50) de la boîte de vitesse (12) est monté à rotation dans la partie d'entraînement en forme de pot (42) et/ou dans l'arbre intermédiaire (36).
